(19)

Europäisches
Patentamt

European
Patent Office

Office européen
des brevets

(11) **EP 1 773 014 A2**

(12) **EUROPEAN PATENT APPLICATION**

(43) Date of publication:
**11.04.2007 Bulletin 2007/15**

(51) Int Cl.:
**H04L 27/26** (2006.01)   **H04L 25/03** (2006.01)

(21) Application number: **06121805.3**

(22) Date of filing: **05.10.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **07.10.2005 KR 20050094367**

(71) Applicant: **Samsung Electronics Co., Ltd.
Suwon-si, Gyeonggi-Do (KR)**

(72) Inventors:
• **Kim, Jae-Kwon
Gyeonggi-do (KR)**

• **Lee, Ye-Hoon
Gyeonggi-do (KR)**
• **Kim, Yung-Soo
Unknown (KR)**
• **You, Cheol-Woo
Unknow (KR)**
• **Kim, Dong-Ho
Unknown (KR)**

(74) Representative: **Grünecker, Kinkeldey,
Stockmair & Schwanhäusser
Anwaltssozietät
Maximilianstrasse 58
80538 München (DE)**

(54) **Orthogonal Frequency Division Multiple Access receiver with two-dimensional equalization**

(57)    Provided is a two-dimensional equalization method in a receiver of a communication system using an Orthogonal Frequency Division Multiple Access (OFDMA) scheme. The receiver sets as a first value a value of a 1-tap frequency domain equalizer (FEQ) corresponding to a sub-channel allocated to the receiver , and sets as a second value a value of a 1-tap FEQ corresponding to sub-channels other than the allocated sub-channel. Upon receipt of a signal, the receiver performs Fast Fourier Transform (FFT) on the received signal, and equalizes the FFT-processed signal according to the values of the 1-tap FEQs.

FIG.1

EP 1 773 014 A2

**Description**

**BACKGROUND OF THE INVENTION**

1. Field of the Invention

The present invention relates generally to an equalization apparatus and method for a communication system using an Orthogonal Frequency Division Multiple Access (OFDMA) scheme (OFDMA communication system), and in particular, to an apparatus and method for performing equalization two-dimensionally in a time domain and a frequency domain.

2. Description of the Related Art

The next generation communication system is evolving into a high-speed wireless communication system that provides services having various Qualities of Service (QoSs) at a high-speed. The high-speed wireless communication system transmits signals over a broadband frequency selective channel, i.e. time dispersive channel, in order to provide high-speed services, and the use of the time dispersive channel causes Inter-Symbol Interference (ISI). Therefore, in the high-speed wireless communication system using the time dispersive channel, it is very important to remove the ISI in order to improve the system efficiency.

Even in the communication system using an Orthogonal Frequency Division Multiplexing (OFDM) scheme (OFDM communication system) which is a typical high-speed wireless communication system, active research is being conducted to efficiently compensate for performance degradation due to generation of the ISI.

In the OFDM communication system, a transmitter performs Inverse Fast Fourier Transform (IFFT) on a transmission signal and inserts a Cyclic Prefix (CP) therein before transmission, and a receiver performs Fast Fourier Transform (FFT) on a received signal to convert a broadband frequency selective channel into a flat fading sub-channel, thereby compensating for the performance degradation due to the generation of the ISI. The term "sub-channel" refers to a channel composed of at least one sub-carrier, and the number of sub-carriers constituting one sub-channel is variable depending on conditions of the OFDM communication system. The compensation for the performance degradation due to the generation of the ISI reduces the frequency bandwidth efficiency due to the CP at the transmitter, resulting in a reduction in the entire performance of the OFDM communication system.

Unlike the OFDM communication system in which a single user, i.e. a single Mobile Station (MS), uses the full frequency bandwidth, i.e. all sub-channels, used in the OFDM communication system, the OFDMA communication system is a multiple access communication system in which a plurality of users, i.e. a plurality of MSs, share all sub-channels used in the OFDMA communication system. There are various schemes of allocating sub-channels to each of a plurality MSs in the OFDMA communication system, and the most efficient scheme among the sub-channel allocation schemes allocates sub-channels having a high channel gain to the MSs. Of course, this is possible under the assumption that not all of MSs of the OFDMA communication system are in a deep fading state, and fading parameters applied to different MSs are independent of each other. In this manner, it is possible to acquire a multi-user diversity gain in the OFDMA communication system. Further, in the OFDMA communication system, because sub-carriers are orthogonal with each other, there is no need for a guard band between user spectral bands. As described above, in the OFDMA communication system, the ISI can be removed in a simple manner. Extensive research on the OFDMA communication system is actively carried out in the next communication system.

In the OFDMA communication system, a length of the CP should be designed longer than the maximum delay spread among the delay spreads of channels for all MSs in the OFDMA communication system. Even though most MSs in the OFDMA communication system experience channels having a short delay spread, i.e. short channels, if there is even one MS experiencing a channel having a long delay spread, all of the MSs in the OFDMA communication system need a long CP. For example, in the OFDMA communication system, the maximum length of the CP, i.e. the maximum length of a guard time (or guard interval), is about 1/4 of the FFT size, and this serves as a considerable overhead in the OFDMA communication system.

As described above, the reduction in the frequency bandwidth efficiency due to the CP in the OFDMA communication system is more considerable than that of the OFDM communication system. The OFDMA communication system is more considerable than the OFDM communication system even in terms of the performance degradation due to the CP.

Various schemes have been provided to minimize the overhead due to the CP, and among them, a time domain channel shortening scheme is the most typical scheme. The time domain channel shortening scheme will now be described in detail herein.

A general Finite Impulse Response (FIR) time domain filter enables the use of a shorter CP by shortening a channel impulse response in the time domain. Herein, a scheme of shortening the channel impulse response in the time domain is called the time domain channel shortening scheme, and the time domain channel shortening scheme generates a spectral null because it considers only the way of shortening the channel impulse response in the time domain, without ever considering a gain of the frequency domain. The spectral null reduces a Signal-to-Noise Ratio (SNR) of its surrounding sub-channels, resulting in an increase in the noise.

In addition, the FIR time domain filter applied to wireless channels is less efficient than the FIR time domain filter applied to Twisted Pair (TP) wire channels. The FIR time domain filter successfully shortens a long TP wire channel impulse response benefiting from the autoregressive characteristic (modeled as Auto-Regressive Moving Average (ARMA) type) of the TP wire channels. Although there is continued research on poles and zeros of various TP channels, there is a need for a long FIR time domain filter in order to shorten the wireless channels modeled as a Moving Average (MA) type.

As described above, the time domain channel shortening scheme generates the spectral null, as it never considers the frequency domain gain, thereby causing an increase in the noise. Accordingly, there is a need for a new scheme for minimizing the overhead due to the CP.

## SUMMARY OF THE INVENTION

It is, therefore, an aspect of the present invention to provide an equalization apparatus and method for minimizing overhead due to a CP in an OFDMA communication system.

It is another aspect of the present invention to provide an apparatus and method for performing two-dimensional equalization in a time domain and a frequency domain in an OFDMA communication system.

It is further another aspect of the present invention to provide an equalization apparatus and method for jointly performing time domain channel shortening and frequency domain equalization in an OFDMA communication system.

According to one aspect of the present invention, there is provided a two-dimensional equalization apparatus in a receiver of a communication system using an Orthogonal Frequency Division Multiple Access (OFDMA) scheme. The apparatus includes an equalizer for setting as a first value a value of a 1-tap frequency domain equalizer (FEQ) corresponding to a sub-channel allocated to the receiver , setting as a second value a value of a 1-tap FEQ corresponding to sub-channels other than the allocated sub-channel, and equalizing a fast Fourier transform (FFT)-processed signal according to the values of the 1-tap FEQs; and an FFT unit for performing FFT on a received signal.

According to another aspect of the present invention, there is provided a two-dimensional equalization method in a receiver of a communication system using an OFDMA scheme. The method includes setting as a first value a value of a 1-tap frequency domain equalizer (FEQ) corresponding to a sub-channel allocated to the receiver itself; setting as a second value a value of a 1-tap FEQ corresponding to sub-channels other than the allocated sub-channel; upon receipt of a signal, performing fast Fourier transform (FFT) on the received signal; and equalizing the FFT-processed signal according to the values of the 1-tap FEQs.

## BRIEF DESCRIPTION OF THE DRAWINGS

The above and other objects, features and advantages of the present invention will become more apparent from the following detailed description when taken in conjunction with the accompanying drawings in which:

FIG. 1 is a diagram illustrating a structure of a receiver in an Orthogonal Frequency Division Multiple Access (OFDMA) communication system according to the present invention;

FIG. 2 is a graph illustrating time domain impulse responses of a general FEQ and a provided Frequency domain EQualizer (FEQ) according to the present invention;

FIG. 3 is a graph illustrating a gain of a sub-channel used in each MS and a 1-tap FEQ value for an allocated sub-channel according to the present invention; and

FIG. 4 is a graph illustrating a comparison of a Bit Error Rate (BER) versus Signal-to-Noise Ratio (SNR) performance between an equalization scheme having a short Cyclic Prefix (CP) and a time domain equalizer, an equalization scheme having a long CP, and a two-dimensional equalization scheme according to the present invention.

## DETAILED DESCRIPTION OF PREFERRED EMBODIMENTS

Preferred embodiments of the present invention will now be described in detail with reference to the annexed drawings. In the following description, a detailed description of known functions and configurations incorporated herein has been omitted for clarity and conciseness.

The present invention provides an apparatus and method for performing equalization two-dimensionally in a time domain and a frequency domain in a communication system using an Orthogonal Frequency Division Multiple Access (OFDMA) scheme (OFDMA communication system). In particular, the present invention provides an equalization apparatus and method for jointly performing time domain channel shortening and frequency domain equalization in an OFDMA communication system, thereby minimizing overhead due to a Cyclic Prefix (CP).

The OFDMA communication system is a multiple access communication system in which a plurality of users, i.e. Mobile Stations (MSs), share all sub-channels used in the OFDMA communication system. Each of the MSs in the OFDMA communication system needs to equalize only the signal received through the sub-channel allocated thereto. Each of the MSs sets a value of a 1-tap Frequency domain EQualizer (FEQ) corresponding to a sub-channel allocated thereto to a reciprocal of a gain of the corresponding sub-channel, and sets a value of a 1-tap FEQ corresponding to the sub-channels not allocated thereto such that the time domain channel shortening can be optimally performed. The 1-tap FEQ value set such that the time domain channel shortening can be optimally performed is a free variable, and it should be set such that the time domain channel shortening can be performed and it is optimized as a value for compensating for distortion of the sub-channel allocated to the corresponding MS. The phrase "shortening a channel in the time domain" means convolution of channel impulse responses of all FEQs and the corresponding time domain impulse responses. The present invention optimizes time domain impulse responses of all the FEQs as described above, for efficient implementation of the filtering process through fast convolution (realized in the frequency domain).

A description will now be made of a downlink scenario of the OFDMA communication system, which should be considered in description of the equalization scheme provided in the present invention.

It is assumed that M MSs exist in the OFDMA communication system, a sub-channel denoted by $S_u$ ($u = 0$, 1, ..., M-1) is allocated to each of the M MSs, and a sub-channel not allocated to each of the M MSs is denoted by $S_u^C$.

A transmission signal in a time domain of an $u^{th}$ MS, i.e. MS #$u$, can be expressed by Equation (1) as

$$\mathbf{x}_u^i = \sum_{k \in S_u} \mathbf{q}_k X_u^i(k) \qquad \ldots \ldots \ldots (1)$$

In Equation (1), $X_u^i(k)$ denotes a symbol of an MS #$u$, transmitted through a $k^{th}$ sub-channel for an $i^{th}$ symbol period. In addition, $\mathbf{x}_u^i$ and $\mathbf{q}_k$ can be expressed by Equation (2) as

$$\mathbf{x}_u^i \overset{\Delta}{=} \left[ x_u^i(0) x_u^i(1) \cdots x_u^i(N-1) \right]^T$$
$$\mathbf{q}_k \overset{\Delta}{=} \frac{1}{\sqrt{N}} \left[ e^{j0} e^{j2\pi k/N} \cdots e^{j2\pi(N-1)k/N} \right]^T \qquad \ldots \ldots \ldots (2)$$

In Equation (2), T denotes a transpose operation.

When transmission signals of all MSs of the OFDMA communication system are combined, the total transmission signal in the time domain can be expressed by Equation (3) as

$$\mathbf{x}^i \overset{\Delta}{=} \sum_{u=0}^{M-1} \mathbf{x}_u^i = \mathbf{Q}\mathbf{X}^i \qquad \ldots \ldots \ldots (3)$$

In Equation (3), $\mathbf{Q}$ denotes an $N \times N$ Inverse Fast Fourier Transform (IFFT) matrix, and $\mathbf{x}_u^i$ and $\mathbf{Q}$ can be expressed by Equation (4) as

$$\mathbf{X}_u^i \stackrel{\Delta}{=} \left[ X_u^i(0) X_u^i(1) \cdots X_u^i(N-1) \right]^T \quad \text{with } X_u^i(k) = 0 \text{ if } k \in S_u^C$$

$$\mathbf{Q} \stackrel{\Delta}{=} \left[ \mathbf{q}_0\, \mathbf{q}_1 \cdots \mathbf{q}_{N-1} \right].$$

$$\cdots (4)$$

After the transmission signals of the MSs are converted into the time domain signals in this manner, a CP is inserted therein. The CP can be expressed by Equation (5) as

$$\widetilde{\mathbf{x}}^i = \left[ x^i(N-v) \cdots x^i(N-1)(\mathbf{x}^i)^T \right]^T \qquad \cdots (5)$$

In Equation (5), $v$ denotes a length of the CP.

It is also assumed that a baseband discrete equivalent channel corresponding to an MS #$u$ ($u$ = 0, 1, ... , M-1) is modeled as an FIR filter, $\mathbf{h}_u = [h_u(0), h_u(1), ..., h_u(L_u-1)]^T$.

As described above herein, a length of the CP should be designed longer than the maximum delay spread among the delay spreads of channels for all MSs in order to prevent interference between Orthogonal Frequency Division Multiplexing (OFDM) symbols. The length of the CP can be expressed by Equation (6) as

$$v \geq \max_{u \in \{0,1,\cdots,M-1\}} L_u - 1 \qquad \cdots (6)$$

In Equation (6), $L_u$ denotes a delay spread of an MS #$u$.

The transmission signal is received at a receiver through a channel, and the signal received at the receiver can be expressed by Equation (7) as

$$y(n) = \widetilde{x}(n) \otimes h_u(n) + z(n), \ 0 \leq n < \infty \qquad \cdots (7)$$

In Equation (7), $y(n)$ denotes a received signal, $\widetilde{x}(n)$ denotes an estimated transmission signal transmitted from a transmitter, $h_u(n)$ denotes a channel, $z(n)$ denotes noise, and $\otimes$ denotes linear convolution. The noise is assumed to be complex white Gaussian $z(n) \sim CN(0,\sigma^2)$.

The $\widetilde{x}(n)$ can be expressed by Equation (8) as

$$\widetilde{x}(n) = \sum_{i=0}^{\infty} \widetilde{x}^i(n) u(n - i(N+v)) \qquad \cdots (8)$$

In Equation (8), $\widetilde{x}^i(n)$ ($n$ = 0, 1, ... , $N + v$-1) denotes an $n$th element of $\widetilde{x}^i$.

As a result, each MS #$u$ receives a signal which is the convolution of the transmission signal and the channel $h_u$, and for a sufficiently long CP, a frequency-domain received signal as expressed by Equation (9) can be acquired using the received signal in the time domain.

$$\mathbf{Y}^i = \mathbf{X}^i \odot \mathbf{H}_u + \mathbf{Z} \qquad \cdots (9)$$

In Equation (9), $\odot$ denotes multiplication between elements, $\mathbf{Y}^i \overset{\Delta}{=} \left[ Y^i(0) Y^i(1) \cdots Y^i(N-1) \right]^T$,

$\mathbf{H}_u \overset{\Delta}{=} \mathbf{Q}^H \left[ \mathbf{h}_u^T \mathbf{O}_{N-L_u}^T \right]^T$, and $\mathbf{Z} \overset{\Delta}{=} \mathbf{Q}^H [z(0)z(1)\cdots z(N-1)]^T$. Herein, $\mathbf{O}_{N-L_u}$ denotes a zero column vector of

length $N-L_u$. In addition, each MS needs to correctly detect only $\hat{\mathbf{X}}_u^i$ among all sub-channel signals received from every MS as shown in Equation (10).

$$\hat{X}_u(k) = Y^i(k) W_u(k), \ \forall k \in S_u \qquad \ldots \ldots \ldots (10)$$

In Equation (10), $W_u(k) = \dfrac{1}{H_u(k)}$, where $H_u(k)$ denotes a $k^{th}$ entry of a vector $\mathbf{H}_u$. For the MS #$u$, $W_u(k)$

does not have to be a reciprocal of $H_u(k)$ if the $k^{th}$ sub-channel is not used in the MS #$u$. A detailed description thereof will be made herein.

In the OFDMA communication system, the bandwidth efficiency is reduced by the following factor expressed by Equation (11) as

$$\frac{N}{N + \max_{u \in \{0,1,\cdots,M-1\}} L_u - 1} \qquad \ldots \ldots \ldots (11)$$

As shown in Equation (11), the maximum delay spread channel of all MSs sharing the OFDM symbols determines the reduction in the bandwidth efficiency . Consequently, the CP overhead in the OFDMA communication system is more significant than that in the OFDM communication system that considers only the single MS.

In order to mitigate the bandwidth efficiency reduction shown in Equation (11), it is possible to use a CP whose length $v'$ is shorter than the maximum delay spread $\max_u L_u - 1$ among the delay spreads of channels for all MSs of the OFDMA communication system, and to shorten the channels $h_u$ which are longer than $v' + 1$. The general time domain FIR filter can be used for shortening the long channels, and the time domain channel shortening scheme will be described herein. It should be noted herein that MS indexes would be omitted in the description of the time domain channel shortening scheme.

The time domain channel shortening FIR filter is designed as shown in Equation (12) in order to Maximize the Shortening Signal-to-Noise Ratio (MSSNR).

$$\mathbf{W}_{MSSNR}^{opt} = \arg \max_{\mathbf{W}_{MSSNR}} \frac{\left\| \widetilde{\mathbf{h}}_{win}^{MSSNR} \right\|^2}{\left\| \widetilde{\mathbf{h}}_{wall}^{MSSNR} \right\|^2} \qquad \ldots \ldots \ldots (12)$$

In Equation (12), $\widetilde{\mathbf{h}}_{win}^{MSSNR}$ and $\widetilde{\mathbf{h}}_{wall}^{MSSNR}$ can be expressed as

$$\begin{aligned} \widetilde{\mathbf{h}}_{win}^{MSSNR} &\overset{\Delta}{=} \mathbf{D}_{(\Delta,N_T)}^{(L_u+L_w)} \widetilde{\mathbf{H}}_{MSSNR} \mathbf{w}_{MSSNR} \\ \widetilde{\mathbf{h}}_{wall}^{MSSNR} &\overset{\Delta}{=} \mathbf{G}_{(\Delta,N_T)}^{(L_u+L_w)} \widetilde{\mathbf{H}}_{MSSNR} \mathbf{w}_{MSSNR} \end{aligned} \qquad \ldots \ldots \ldots (13)$$

In Equation (13), $\mathbf{D}_{(\Delta,N_T)}^{(L_u+L_w)}$ and $\mathbf{G}_{(\Delta,N_T)}^{(L_u+L_w)}$ can be expressed as

$$\mathbf{D}_{(\Delta,N_T)}^{(L_u+L_w)} \triangleq Diag(\overbrace{\underbrace{0,\cdots,0}_{\Delta\ zeros},\underbrace{1,\cdots,1}_{N_T\ ones},0,\cdots,0}^{L_u+L_w\ elements})$$

$$\mathbf{G}_{(\Delta,N_T)}^{(L_u+L_w)} \triangleq Diag(\overbrace{\underbrace{1,\cdots,1}_{\Delta\ ones},\underbrace{0,\cdots,0}_{N_T\ zeros},1,\cdots,1}^{L_u+L_w\ elements}) \qquad \dots\dots(14)$$

In Equation (13), the matrix $\widetilde{\mathbf{h}}^{\text{MSSNR}}$ of dimension $(L_u + L_w - 1) \times L_w$ is a Toeplitz matrix with a first column defined by Equation (15) as

$$\left[h(0)h(1)\cdots h(L_u-1)0_0 0_1 \cdots 0_{L_w-2})\right]^T \qquad \dots\dots(15)$$

In Equation (13), the vector $\mathbf{w}_{\text{MSSNR}} \triangleq \left[w_{\text{MSSNR}}(0),\cdots,w_{\text{MSSNR}}(L_w-1)\right]^T$ denotes a time domain channel shortening filter, $\Delta$ denotes the channel delay spread, and $L_w$ denotes a length of the equalizer. In Equation (13), $\widetilde{\mathbf{h}}_{\text{win}}^{\text{MSSNR}} \triangleq \mathbf{D}_{(\Delta,N_T)}^{(L_u+L_w)}\widetilde{\mathbf{H}}_{\text{MSSNR}}\mathbf{w}_{\text{MSSNR}}$ denotes a shortened channel ($N_T$ samples long) having the desired maximum energy, and $\widetilde{\mathbf{h}}_{\text{wall}}^{\text{MSSNR}} \triangleq \mathbf{G}_{(\Delta,N_T)}^{(L_u+L_w)}\widetilde{\mathbf{H}}_{\text{MSSNR}}\mathbf{w}_{\text{MSSNR}}$ denotes detrimental channel components outside the desired time window.

Equation (11) can be expressed as the eigenproblem of Equation (16).

$$\widetilde{\mathbf{H}}_{\text{MSSNR}}^H \mathbf{D}_{(\Delta,N_T)}^{(L_u+L_w)}\widetilde{\mathbf{H}}_{\text{MSSNR}}\mathbf{w}_{\text{MSSNR}} = \lambda\widetilde{\mathbf{H}}_{\text{MSSNR}}^H \mathbf{G}_{(\Delta,N_T)}^{(L_u+L_w)}\widetilde{\mathbf{H}}_{\text{MSSNR}}\mathbf{w}_{\text{MSSNR}} \qquad \dots\dots(16)$$

The optimal solution of Equation (16) is the eigenvector corresponding to the largest eigenvalue.

A time domain equalizer will first be designed, and then, an FEQ value at each sub-channel will be set to a reciprocal of the product of a channel gain at each sub-channel and a gain of the time domain equalizer.

The time domain channel shortening filters were developed for the TP wire channels, and for the wireless channels, its length is much longer. It is not preferable to use the general time domain channel shortening filter for the wireless channels because the increase in the length of the time domain channel shortening filter considerably increases calculation complexity,. In addition, because the channels are shortened only in the time domain without considering the frequency domain as described above, the noise problem due to the spectral null occurs. Therefore, the present invention provides a two-dimensional equalization scheme for jointly performing time domain channel shortening and frequency domain equalization.

A detailed description will now be made of the two-dimensional equalization scheme provided in the present invention.

As described above, in the OFDMA communication system, each MS uses only the sub-channel allocated thereto among the sub-channels of the OFDMA communication system, and has a need to equalize only the signal received through the sub-channel allocated thereto. Therefore, the present invention fixes only the FEQ tap at the sub-channel allocated to each MS to a reciprocal of the sub-channel gain. In addition, the FEQ taps at the sub-channels not allocated to each MS are optimized so as to shorten the channel impulse responses, and all FEQ time domain impulse responses are shortened. In order to shorten the wireless channels, the longer filter is needed. Therefore, the present invention will apply an overlap-add fast convolution scheme.

The optimization problem will now be considered herein to provide optimal FEQ tap values at the sub-channels not allocated to each MS. As described above, because the downlink scenario of the OFDMA communication system considered in the description of the time domain channel shortening scheme provided in the present invention considers only a particular MS, the MS indexes will be omitted in the following description. Further, in the following description, $\tilde{\mathbf{h}}$ denotes a shortened time domain channel impulse response, $\tilde{\mathbf{h}}_{win}$ denotes a window of $N_T$ consecutive samples of $\tilde{\mathbf{h}}$ with starting sample index of $\Delta$, and $\tilde{\mathbf{h}}_{wall}$ denotes the remaining $(N\text{-}N_T)$ samples, where N is a Fast Fourier Transform (FFT) size.

The $\tilde{\mathbf{h}}$ can be expressed as Equation (17), $\tilde{\mathbf{h}}_{win}$ can be expressed as Equation (18), and $\tilde{\mathbf{h}}_{wall}$ can be expressed as Equation (19).

$$\tilde{\mathbf{h}} \overset{\Delta}{=} \tilde{\mathbf{H}}\mathbf{Q}\tilde{\mathbf{W}} \qquad \ldots \ldots \ldots (17)$$

$$\tilde{\mathbf{h}}_{win} \overset{\Delta}{=} \mathbf{D}^{(N)}_{(\Delta, N_T)} \tilde{\mathbf{H}}\mathbf{Q}\tilde{\mathbf{W}} \qquad \ldots \ldots \ldots (18)$$

$$\tilde{\mathbf{h}}_{wall} \overset{\Delta}{=} \mathbf{G}^{(N)}_{(\Delta, N_T)} \tilde{\mathbf{H}}\mathbf{Q}\tilde{\mathbf{W}} \qquad \ldots \ldots \ldots (19)$$

In Equation (18) and Equation (19), $\tilde{\mathbf{H}}$ can be expressed by Equation (20) as

$$\tilde{\mathbf{H}} \overset{\Delta}{=} \begin{pmatrix} h(0) & 0 & 0 & 0 & \cdots & 0 & 0 \\ h(1) & h(0) & 0 & 0 & \cdots & 0 & 0 \\ h(2) & h(1) & h(0) & 0 & \cdots & 0 & 0 \\ & \ddots & \ddots & & \cdots & & 0 \\ 0 & \cdots & 0 & h(L_u - 1) & \cdots & h(1) & h(0) \end{pmatrix} \qquad \ldots \ldots \ldots (20)$$

In Equation (18) and Equation (19), $\tilde{\mathbf{W}}$ denotes an $N\times1$ vector with entries $\tilde{W}(k) = \dfrac{1}{H(k)}$, if k $\in$ S$_u$.

$\tilde{W}(k)(\tilde{W}(k)$ for $k \in S_u^C)$ for the sub-channels not allocated to each MS will be determined such that the objective function of Equation (21) is minimized.

$$\frac{\left\|\widetilde{\mathbf{h}}_{\text{wall}}\right\|^2}{\left\|\widetilde{\mathbf{h}}_{\text{win}}\right\|^2 + \left\|\widetilde{\mathbf{h}}_{\text{wall}}\right\|^2} = \frac{\widetilde{\mathbf{W}}^H \mathbf{Q}^H \widetilde{\mathbf{H}}^H \mathbf{G}_{(\Delta,N_T)}^{(N)} \widetilde{\mathbf{H}} \mathbf{Q} \widetilde{\mathbf{W}}}{\widetilde{\mathbf{W}}^H \mathbf{Q}^H \widetilde{\mathbf{H}}^H \mathbf{D}_{(\Delta,N_T)}^{(N)} \widetilde{\mathbf{H}} \mathbf{Q} \widetilde{\mathbf{W}} + \widetilde{\mathbf{W}}^H \mathbf{Q}^H \widetilde{\mathbf{H}}^H \mathbf{G}_{(\Delta,N_T)}^{(N)} \widetilde{\mathbf{H}} \mathbf{Q} \widetilde{\mathbf{W}}} \qquad \ldots \ldots (21)$$

$$= \frac{\widetilde{\mathbf{W}}^H \mathbf{Q}^H \widetilde{\mathbf{H}}^H \mathbf{G}_{(\Delta,N_T)}^{(N)} \widetilde{\mathbf{H}} \mathbf{Q} \widetilde{\mathbf{W}}}{\widetilde{\mathbf{W}}^H \mathbf{Q}^H \widetilde{\mathbf{H}}^H \widetilde{\mathbf{H}} \mathbf{Q} \widetilde{\mathbf{W}}}$$

In order to minimize Equation (21), the channel gain for the allocated sub-channels is defined by Equation (22) as

$$\widetilde{\mathbf{W}}(k) = \frac{1}{H(k)}, \forall k \in S_u \qquad \ldots \ldots \ldots (22)$$

If Equation (21) is minimized, the impulse response length of the FEQ can be very long. If the impulse response length of the FEQ is too long, the overlap-add fast convolution scheme becomes computationally inefficient because $(N-L_w+1)$ time domain samples are equalized by a cycle of the overlap-add fast convolution scheme. The cycle includes FFT, frequency domain product, and IFFT. A length $L_w$ of the FEQ should be constrained. In order to constrain the length of the FEQ time domain impulse responses, the present invention defines $\widetilde{\mathbf{w}}$, $\widetilde{\mathbf{w}}_{\text{win}}$ and $\widetilde{\mathbf{w}}_{\text{wall}}$ as expressed in Equation (23) that follows.

$$\widetilde{\mathbf{w}} \stackrel{\Delta}{=} \mathbf{Q}\widetilde{\mathbf{W}}$$

$$\widetilde{\mathbf{w}}_{\text{win}} \stackrel{\Delta}{=} \mathbf{D}_{(\Delta_w,L_w)}^{(N)} \mathbf{Q}\widetilde{\mathbf{W}} \qquad \ldots \ldots \ldots (23)$$

$$\widetilde{\mathbf{w}}_{\text{wall}} \stackrel{\Delta}{=} \mathbf{G}_{(\Delta_w,L_w)}^{(N)} \mathbf{Q}\widetilde{\mathbf{W}}$$

Equation (24) below should be minimized.

$$\frac{\left\|\widetilde{\mathbf{w}}_{\text{wall}}\right\|^2}{\left\|\widetilde{\mathbf{w}}_{\text{win}}\right\|^2 + \left\|\widetilde{\mathbf{w}}_{\text{wall}}\right\|^2}$$

$$= \frac{\widetilde{\mathbf{W}}^H \mathbf{Q}^H \mathbf{G}_{(\Delta_w,L_w)}^{(N)} \mathbf{Q}\widetilde{\mathbf{W}}}{\widetilde{\mathbf{W}}^H \mathbf{Q}^H \mathbf{D}_{(\Delta_w,L_w)}^{(N)} \mathbf{Q}\widetilde{\mathbf{W}} + \widetilde{\mathbf{W}}^H \mathbf{Q}^H \widetilde{\mathbf{H}}^H \mathbf{G}_{(\Delta_w,L_w)}^{(N)} \mathbf{Q}\widetilde{\mathbf{W}}} \qquad \ldots \ldots \ldots (24)$$

$$= \frac{\widetilde{\mathbf{W}}^H \mathbf{Q}^H \mathbf{G}_{(\Delta_w,L_w)}^{(N)} \mathbf{Q}\widetilde{\mathbf{W}}}{\widetilde{\mathbf{W}}^H \mathbf{Q}^H \mathbf{Q}\widetilde{\mathbf{W}}} = \frac{\widetilde{\mathbf{W}}^H \mathbf{Q}^H \mathbf{G}_{(\Delta_w,L_w)}^{(N)} \mathbf{Q}\widetilde{\mathbf{W}}}{\left\|\widetilde{\mathbf{w}}\right\|^2}$$

Even when the objective function shown in Equation (24) is minimized, the FEQ tap values at the allocated sub-channels should be still constrained to be the reciprocal of the channel gains.

The numerators in Equation (21) and Equation (24) serve as interferences to each other. In order to minimize the two interferences, the optimization problem as expressed by Equation (25) should be considered.

$$\widetilde{\mathbf{W}}^{opt} = \arg\min_{\widetilde{\mathbf{W}}}\left\{(1-\beta)\frac{\left\|\widetilde{\mathbf{h}}_{\text{wall}}\right\|^2}{\left\|\widetilde{\mathbf{h}}_{\text{win}}\right\|^2 + \left\|\widetilde{\mathbf{h}}_{\text{wall}}\right\|^2} + \beta\frac{\left\|\widetilde{\mathbf{w}}_{\text{wall}}\right\|^2}{\left\|\widetilde{\mathbf{w}}_{\text{win}}\right\|^2 + \left\|\widetilde{\mathbf{w}}_{\text{wall}}\right\|^2}\right\} \quad \ldots\ldots\ldots (25)$$

$$\text{subject to } \widetilde{\mathbf{W}}(k) = \frac{1}{H(k)}, \forall k \in S_u$$

In Equation (25), $\beta$ is a kind of weight, and indicates a real number between 0 and 1.

A comparison between the general channel shortening scheme and the novel channel shortening scheme provided in the present invention is made as follows.

(1) Both the general channel shortening scheme and the novel channel shortening scheme maximize the energy of the shortened channel in a desired time domain window and minimize the energy outside the desired time domain window.

(2) In the general channel shortening scheme, time domain FIR filter coefficients are designed. However, in the novel channel shortening scheme, FEQ coefficients are designed.

(3) The general channel shortening scheme does not control the FEQ taps at the allocated sub-channel in designing the time domain equalizer. However, the provided channel shortening scheme controls the FEQ by constraining the FEQ taps at the allocated sub-channels to be the reciprocal of the sub-channel gains.

By constraining the FEQ taps of the allocated sub-channels directly, the provided equalization scheme does not suffer from noise enhancement caused by spectral nulls occurring in the general time domain equalizer-based receiver.

In order to decide the weight $\beta$ in Equation (25), the following three assumptions will be made.

First, the channel is constrained to have the unit energy, i.e. $\|\mathbf{h}_u\|^2 = 1$. This constraint is met by scaling the channel impulse response at the receiver.

Second, the multi-path components of a channel are independent to have the relationship as expressed by Equation (26).

$$\begin{aligned}
\mathbf{E}_{\mathbf{h}_u}\left\{\left\|\widetilde{\mathbf{h}}_{\text{win}}\right\|^2 + \left\|\widetilde{\mathbf{h}}_{\text{wall}}\right\|^2\right\} &= \widetilde{\mathbf{W}}^H \mathbf{Q}^H \mathbf{E}_{\mathbf{h}_u}\{\widetilde{\mathbf{H}}^H \widetilde{\mathbf{H}}\}\mathbf{Q}\widetilde{\mathbf{W}} \\
&= \widetilde{\mathbf{W}}^H \mathbf{Q}^H \mathbf{Q}\widetilde{\mathbf{W}} \\
&= \left\|\widetilde{\mathbf{W}}\right\|^2 \\
&= \left\|\widetilde{\mathbf{W}}_{win}\right\|^2 + \left\|\widetilde{\mathbf{W}}_{wall}\right\|^2
\end{aligned} \qquad \ldots\ldots\ldots\ldots (26)$$

In Equation (26), $\mathbf{E}_{\mathbf{h}_u}\{\cdot\}$ stands for the stochastic expectation with regard to the distribution of $\mathbf{h}_u$.

Third, based on the above identity of Equation (26), the relationship as expressed by Equation (27) is given.

$$\left\|\widetilde{\mathbf{h}}_{\text{win}}\right\|^2 + \left\|\widetilde{\mathbf{h}}_{\text{wall}}\right\|^2 = \left\|\widetilde{\mathbf{w}}_{\text{win}}\right\|^2 + \left\|\widetilde{\mathbf{w}}_{\text{wall}}\right\|^2 = \left\|\widetilde{\mathbf{W}}\right\|^2 \qquad \ldots\ldots\ldots\ldots (27)$$

The denominators of the two objective functions in Equation (25) are identical based on Equation (27). Although the assumption of Equation (27) may not be accurate in the actual communication system, it becomes much more valid as the number of independent multi-paths increases.

The impulse response $\widetilde{\mathbf{h}}_{\text{wall}}$ is involved with the transmitted signal and serves as interference. If the channel has unit energy, the transmitted signal and the received signal have the same power. Hence, $\widetilde{\mathbf{h}}_{\text{wall}}$ and $\widetilde{\mathbf{w}}_{\text{wall}}$ require the same weight. As a consequence, if β=0.5 in Equation (25), the following optimization problem as expressed by Equation (28) is given.

$$\widetilde{\mathbf{W}}^{\text{opt}} = \arg\min_{\widetilde{\mathbf{W}}} \left\{ \frac{\left\|\widetilde{\mathbf{h}}_{\text{wall}}\right\|^2 + \left\|\widetilde{\mathbf{w}}_{\text{wall}}\right\|^2}{\sum_{k \in S_u^C} \left|\widetilde{\mathbf{W}}(k)\right|^2} \right\} \qquad \ldots\ldots\ldots\ldots (28)$$

$$\text{subject to } \widetilde{\mathbf{W}}(k) = \frac{1}{H(k)}, \forall k \in S_u$$

It should be noted in Equation (28) that $\sum_{k \in S_u^C} \left|\widetilde{W}(k)\right|^2$ is used instead of $\|\widetilde{\mathbf{w}}\|^2$. This change facilitates the transformation of the constrained optimization problem into an unconstrained problem. Due to the above assumptions, the solution for the minimization problem of Equation (28) is different from that of Equation (25).

A description will now be made of the solution for the minimization problem of Equation (28).

The objective function can be expressed by Equation (28) as

$$\frac{\left\|\widetilde{\mathbf{h}}_{\text{wall}}\right\|^2 + \left\|\widetilde{\mathbf{w}}_{\text{wall}}\right\|^2}{\sum_{k \in S_u^C} \left|\widetilde{\mathbf{W}}(k)\right|^2} = \frac{\widetilde{\mathbf{W}}^H \mathbf{Q}^H \widetilde{\mathbf{H}}^H \mathbf{G}_{(\Delta, N_T)}^{(N)} \widetilde{\mathbf{H}} \mathbf{Q} \widetilde{\mathbf{W}} + \widetilde{\mathbf{W}}^H \mathbf{Q}^H \widetilde{\mathbf{H}}^H \mathbf{G}_{(\Delta_w, L_w)}^{(N)} \mathbf{Q} \widetilde{\mathbf{W}}}{\sum_{k \in S_u^C} \left|\widetilde{\mathbf{W}}(k)\right|^2}$$

$$\ldots\ldots (29)$$

$$= \frac{\widetilde{\mathbf{W}}^H \mathbf{Q}^H \left(\widetilde{\mathbf{H}}^H \mathbf{G}_{(\Delta, N_T)}^{(N)} \widetilde{\mathbf{H}} + \mathbf{G}_{(\Delta_w, L_w)}^{(N)} \mathbf{Q} \widetilde{\mathbf{W}}\right)}{\sum_{k \in S_u^C} \left|\widetilde{\mathbf{W}}(k)\right|^2}$$

In an attempt to make the problem mathematically more tractable, the allocated (used) and non-allocated (unused) sub-channels for an MS #u will be separated as expressed by Equation (30) that follows.

$$\mathbf{W}_{\text{used}} \overset{\Delta}{=} \left[1/H(S_u(1)), 1/H(S_u(2)), \cdots, 1/H(S_u(|S_u|))\right]^T$$

$$\mathbf{W}_{\text{unused}} \overset{\Delta}{=} \left[W(S_u^C(1)), W(S_u^C(2)), \cdots, W(|S_u^C|)\right]^T$$

$$\mathbf{Q}_{S_u} \overset{\Delta}{=} \left[\mathbf{q}_{S_u(1)} \mathbf{q}_{S_u(2)} \cdots \mathbf{q}_{S_u(|S_u|)}\right] \qquad \ldots\ldots\ldots\ldots (30)$$

$$\mathbf{Q}_{S_u^C} \overset{\Delta}{=} \left[\mathbf{q}_{S_u^C(1)} \mathbf{q}_{S_u^C(2)} \cdots \mathbf{q}_{S_u^C(|S_u^C|)}\right]$$

In Equation (30), $\mathbf{W}_{\text{used}}$ represents FEQ tap values of sub-channels used by the MS #u, and $\mathbf{W}_{\text{used}}$ is assumed to be a constant vector for a given channel. In addition, $\mathbf{W}_{\text{unused}}$ is the FEQ tap values to be optimized such that the objective function of Equation (29) is minimized.

The numerator of the objective function can be expressed by Equation (31) as

$$A(\mathbf{W}_{\text{unused}}) \overset{\Delta}{=} \left\| \widetilde{\mathbf{h}}_{\text{wall}} \right\|^2 + \left\| \widetilde{\mathbf{w}}_{\text{wall}} \right\|^2$$

$$= \begin{bmatrix} \mathbf{W}_{\text{used}} \\ \mathbf{W}_{\text{unused}} \end{bmatrix}^H \left[ \mathbf{Q}_{S_u} \mathbf{Q}_{S_u^C} \right]^H \left( \widetilde{\mathbf{H}}^H \mathbf{G}_{(\Delta, N_T)}^{(N)} \widetilde{\mathbf{H}} + \mathbf{G}_{(\Delta_w, L_w)}^{(N)} \right) \left[ \mathbf{Q}_{S_u} \mathbf{Q}_{S_u^C} \right] \begin{bmatrix} \mathbf{W}_{\text{used}} \\ \mathbf{W}_{\text{unused}} \end{bmatrix} \quad \cdots \cdots (31)$$

$$= \mathbf{W}_{used}^H \mathbf{R}_{S_u S_u} \mathbf{W}_0 + \mathbf{W}_{used}^H \mathbf{R}_{S_u S_u^C} \mathbf{W} + \mathbf{W}_{unused}^H \mathbf{R}_{S_u^C S_u} \mathbf{W}_{used}$$

$$+ \mathbf{W}_{unused}^H \mathbf{R}_{S_u^C S_u^C} \mathbf{W}_{unused}$$

In Equation (31), the respective parameters can be expressed by Equation (32) as

$$\mathbf{R}_{S_u S_u} \overset{\Delta}{=} \mathbf{Q}_{S_u}^H \left( \widetilde{\mathbf{H}}^H \mathbf{G}_{(\Delta, N_T)}^{(N)} \widetilde{\mathbf{H}} + \mathbf{G}_{(\Delta_w, L_w)}^{(N)} \right) \mathbf{Q}_{S_u}$$

$$\mathbf{R}_{S_u^C S_u} \overset{\Delta}{=} \mathbf{Q}_{S_u^C}^H \left( \widetilde{\mathbf{H}}^H \mathbf{G}_{(\Delta, N_T)}^{(N)} \widetilde{\mathbf{H}} + \mathbf{G}_{(\Delta_w, L_w)}^{(N)} \right) \mathbf{Q}_{S_u}$$

$$\mathbf{R}_{S_u S_u^C} \overset{\Delta}{=} \mathbf{Q}_{S_u}^H \left( \widetilde{\mathbf{H}}^H \mathbf{G}_{(\Delta, N_T)}^{(N)} \widetilde{\mathbf{H}} + \mathbf{G}_{(\Delta_w, L_w)}^{(N)} \right) \mathbf{Q}_{S_u^C}$$

$$\mathbf{R}_{S_u^C S_u^C} \overset{\Delta}{=} \mathbf{Q}_{S_u^C}^H \left( \widetilde{\mathbf{H}}^H \mathbf{G}_{(\Delta, N_T)}^{(N)} \widetilde{\mathbf{H}} + \mathbf{G}_{(\Delta_w, L_w)}^{(N)} \right) \mathbf{Q}_{S_u^C}$$

$$\cdots \cdots \cdots \cdots (32)$$

The denominator in Equation (29) can be expressed by Equation (33) as

$$B(\mathbf{W}_{\text{unused}}) \overset{\Delta}{=} \sum_{k \in S_u^C} \left| \widetilde{W}(k) \right|^2 = \left\| \mathbf{W}_{\text{unused}} \right\|^2 \qquad \cdots \cdots \cdots \cdots (33)$$

Then, the following equivalent minimization problem is expressed by Equation (34) as

$$\mathbf{W}_{\text{unused}}^{\text{opt}} = \arg \min_{\mathbf{W}} A(\mathbf{W}_{\text{unused}}) \ \text{ subject to } B(\mathbf{W}_{\text{unused}}) = \gamma \qquad \cdots \cdots \cdots \cdots (34)$$

In Equation (34), $\gamma (\gamma > 0)$ is a real constant. The minimization problem of Equation (34) again reduces to the following unconstrained minimization problem expressed by Equation (35) because for any given $\mathbf{W}_{\text{unused}}^{\text{opt}}$ and $\gamma \in \mathsf{R}$, it can be scaled to satisfy $\left\| \mathbf{W}_{\text{unused}}^{\text{opt}} \right\|^2 = \gamma$ .

$$\mathbf{W}_{\text{unused}}^{\text{opt}} = \arg \min_{\mathbf{W}} A(\mathbf{W}_{\text{unused}}) \qquad \cdots \cdots \cdots \cdots (35)$$

Since the objective function $A(\mathbf{W}_{\text{unused}}): \mathbf{C}^{(N-|S_u|)} \rightarrow \mathsf{R}$ is convex, it is possible to obtain the result by differentiating the objective function as expressed by Equation (36).

$$\frac{\partial A(\mathbf{W}_{\text{unused}})}{\partial \mathbf{W}*} = \mathbf{R}_{S_u^C S_u} \mathbf{W}_{\text{unused}} + \mathbf{R}_{S_u^C S_u^C} \mathbf{W}_{\text{unused}} = \mathbf{0}_{\left|S_u^C\right|} \qquad \cdots\cdots\cdots (36)$$

In Equation (36), $\mathbf{0}_{\left|S_u^C\right|}$ is the zero column vector of length $\left|S_u^C\right|$.

From Equation (36), the minimizer can be obtained as expressed by Equation (37).

$$\mathbf{W}_{\text{unused}}^{\text{opt}} = -\mathbf{R}_{S_u^C S_u^C}^{-1} \mathbf{R}_{S_u^C S_u} \mathbf{W}_{\text{used}} \qquad \cdots\cdots\cdots (37)$$

Once $\mathbf{W}_{\text{unused}}^{\text{opt}}$ is found, the following as expressed by Equation (38) can be obtained.

$$\widetilde{\mathbf{W}}_{\text{separated}}^{\text{opt}} = \begin{bmatrix} \mathbf{W}_{\text{used}} \\ \mathbf{W}_{\text{unused}}^{\text{opt}} \end{bmatrix} \qquad \cdots\cdots\cdots (38)$$

If Equation (37) is substituted into Equation (38), the result can be obtained as expressed by Equation (39).

$$\begin{aligned}
\widetilde{\mathbf{W}}_{\text{separated}}^{\text{opt}} &= \begin{bmatrix} \mathbf{I}_{|S_u|} \\ -\mathbf{R}_{S_u^C S_u^C}^{-1} \mathbf{R}_{S_u^C S_u} \end{bmatrix} \mathbf{W}_{\text{used}} \\
&= \begin{bmatrix} \mathbf{I}_{|S_u|} \\ -\left(\mathbf{Q}_{S_u^C}^{-1} \mathbf{R} \mathbf{Q}_{S_u^C}\right)^{-1} \mathbf{Q}_{S_u^C}^{H} \mathbf{R} \mathbf{Q}_{S_u} \end{bmatrix} \mathbf{W}_{\text{used}}
\end{aligned} \qquad \cdots\cdots\cdots (39)$$

In Equation (39), $\mathbf{I}_{|S_u|}$ denotes an $|S_u|\times|S_u|$ identity matrix, and $\mathbf{R} = \widetilde{\mathbf{H}}^{H} \mathbf{G}_{(\Delta,N_T)}^{(N)} \widetilde{\mathbf{H}} + \mathbf{G}_{(\Delta_w,L_w)}^{(N)}$. By rearranging the entries of the above solution $\widetilde{\mathbf{W}}_{\text{separated}}^{\text{opt}}$, $\widetilde{\mathbf{W}}^{\text{opt}}$ can be finally obtained.

An analysis will now be made on the Signal-to-Interference plus Noise Ratio (SNR) according to the two-dimensional equalization scheme provided in the present invention.

At each sub-channel $k \in S_u$, the estimated MS signal can be expressed by Equation (40) as

$$\hat{X}_u(k) = X_u(k) + \mathrm{I}_{\widetilde{h}_{\text{wall}}}(k) + \mathrm{I}_{\widetilde{w}_{\text{wall}}}(k) + Z(k)\widetilde{W}^{\text{opt}}(k) \qquad \cdots\cdots\cdots (40)$$

In Equation (40), $X_u(k)$ denotes a desired signal, $\mathrm{I}_{\widetilde{h}_{\text{wall}}}(k)$ and $\mathrm{I}_{\widetilde{w}_{\text{wall}}}(k)$ stand for the interferences caused by Equation (19) and Equation (23), respectively, and $Z(k)\widetilde{W}^{\text{opt}}(k)$ denotes the additive noise component after the filtering.

The interferences $\mathrm{I}_{\widetilde{h}_{\text{wall}}}(k)$ and $\mathrm{I}_{\widetilde{w}_{\text{wall}}}(k)$ caused by Equation (19) and Equation (23) will now be analyzed.

The interference $\mathrm{H}_{\widetilde{h}_{\text{wall}}}(k)$ caused by Equation (19) will first be described herein.

In order to make the analysis more retractable, it is assumed that there is no power control at the transmitter,

i.e. $\mathrm{E}\{|X_{\mathrm{u}}^{\mathrm{i}}(k)|^2\} = P_x, \forall k \in S_u$ . Then the variance of the interference due to imperfect channel shortening becomes as expressed by Equation (41) as

$$
\begin{aligned}
\mathrm{E}\left\{\left|\mathrm{I}_{\widetilde{\mathrm{h}}_{\mathrm{wall}}}(k)\right|^2\right\} &= P_x\left|\mathbf{q}_k^H \widetilde{\mathbf{h}}_{\mathrm{wall}}\right|^2 \\
&= P_x \widetilde{\mathbf{W}}^{\mathrm{opt}\ H}\mathbf{Q}^H\widetilde{\mathbf{H}}^H\mathbf{G}_{(\Delta, N_T)}^{(N)}\mathbf{q}_k\mathbf{q}_k^H\mathbf{G}_{(\Delta, N_T)}^{(N)}\widetilde{\mathbf{H}}\mathbf{Q}\widetilde{\mathbf{W}}^{\mathrm{opt}}
\end{aligned} \qquad \ldots\ldots\ldots\ldots (41)
$$

Next, the interference $\mathrm{I}_{\widetilde{\mathrm{w}}_{\mathrm{wall}}}(k)$ caused by Equation (23) will be described herein.

As described above, in order to make the analysis more retractable, if it is assumed that there is no power control at the transmitter, i.e. $\mathrm{E}\{|X_{\mathrm{u}}^{\mathrm{i}}(k)|^2\} = P_x, \forall k \in S_u$ , then the interference variance due to the channel shortening becomes as expressed by Equation (42) as

$$
\begin{aligned}
\mathrm{E}\left\{\left|\mathrm{I}_{\widetilde{\mathrm{w}}_{\mathrm{wall}}}(k)\right|^2\right\} &= P_x\left|\mathbf{q}_k^H \widetilde{\mathbf{H}}\widetilde{\mathbf{w}}_{\mathrm{wall}}\right|^2 \\
&= P_x \widetilde{\mathbf{W}}_{\mathrm{opt}}^H\mathbf{Q}^H\mathbf{G}_{(\Delta_w, L_w)}^{(N)}\widetilde{\mathbf{H}}^H\mathbf{q}_k\mathbf{q}_k^H\widetilde{\mathbf{H}}\mathbf{G}_{(\Delta_w, L_w)}^{(N)}\mathbf{Q}\widetilde{\mathbf{W}}^{\mathrm{opt}}
\end{aligned} \qquad \ldots\ldots\ldots\ldots (42)
$$

Finally, the variance of the additive noise after equalization is expressed by Equation 43 as

$$
\mathrm{E}\left\{\left|Z(k)\widetilde{W}_{\mathrm{opt}}(k)\right|^2\right\} = \sigma^2\left|\widetilde{W}_{\mathrm{opt}}(k)\right|^2 \qquad \ldots\ldots\ldots\ldots (43)
$$

If the above two interferences are combined with the additive nose and the independence between the above two interferences is assumed, the SINR at a $k^{\mathrm{th}}$ sub-channel can be expressed by Equation (44) as

$$
\begin{aligned}
\mathrm{SINR}(k) &= \frac{P_x}{\mathrm{E}\left\{\left|\mathrm{I}_{\widetilde{\mathrm{h}}_{\mathrm{wall}}}(k)\right|^2\right\} + \mathrm{E}\left\{\left|\mathrm{I}_{\widetilde{\mathrm{w}}_{\mathrm{wall}}}(k)\right|^2\right\} + \mathrm{E}\left\{\left|Z(k)\widetilde{W}_{\mathrm{opt}}(k)\right|^2\right\}} \\
&= \frac{P_x}{P_x\widetilde{\mathbf{W}}_{\mathrm{opt}}^H\mathbf{Q}^H\mathbf{T}\mathbf{Q}\widetilde{\mathbf{W}}^{\mathrm{opt}} + \sigma^2\left|\widetilde{W}_{\mathrm{opt}}(k)\right|^2}
\end{aligned} \qquad \ldots\ldots\ldots (44)
$$

In Equation (44), T can be expressed by Equation (45) as

$$
\mathbf{T} = \widetilde{\mathbf{H}}^H\mathbf{G}_{(\Delta_T, N_T)}^{(N)}\mathbf{q}_k\mathbf{q}_k^H\mathbf{G}_{(\Delta, N_T)}^{(N)}\widetilde{\mathbf{H}} + \mathbf{G}_{(\Delta_w, L_w)}^{(N)}\widetilde{\mathbf{H}}^H\mathbf{q}_k\mathbf{q}_k^H\widetilde{\mathbf{H}}\mathbf{G}_{(\Delta_w, L_w)}^{(N)} \qquad \ldots\ldots\ldots (45)
$$

From Equation (44) and Equation (45), it can be noted that if both the effective channel and the equalizer are shortened successfully, i.e. $\|\widetilde{h}_{\mathrm{wall}}\|^2 = 0$ and $\|\widetilde{w}_{\mathrm{wall}}\|^2 = 0$, then SINR is equal to the matched filter bound at the allocated sub-channels.

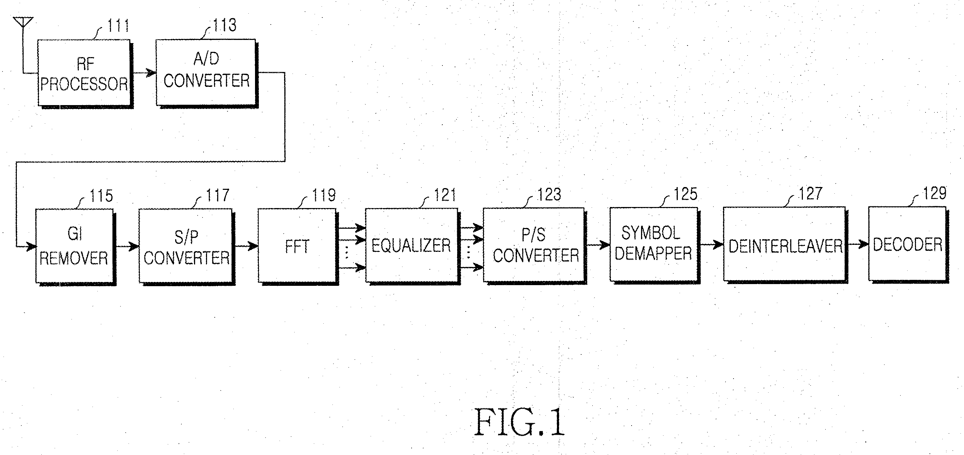

Thus far, the two-dimensional equalization scheme provided in the present invention has been described . Next, with reference to FIG. 1, a description will now be made of an internal structure of a receiver, i.e. MS, in the OFDMA communication system according to the present invention.

FIG. 1 is a diagram illustrating a structure of a receiver in an OFDMA communication system according to an embodiment of the present invention.

Referring to FIG. 1, a receiver, i.e. MS, of the OFDMA communication system includes a Radio Frequency (RF) processor 111, an Analog-to-Digital (A/D) converter 113, a Guard Interval (GI) remover 115, a Serial-to-Parallel (S/P) converter 117, a Fast Fourier Transform (FFT) unit 119, an equalizer 121, a Parallel-to-Serial (P/S) converter 123, a symbol demapper 125, a deinterleaver 127 and a decoder 129.

A signal transmitted from a transmitter, for example, a Base Station (BS), of the OFDMA communication system is received via a reception antenna, experiencing a multi-path channel with noise. The signal received via the reception antenna is input to the RF processor 111, and the RF processor 111 down-converts the received signal into an Intermediate Frequency (IF) signal, and outputs the IF signal to the A/D converter 113.

The A/D converter 113 converts the analog signal output from the RF processor 111 into a digital signal, and outputs the digital signal to the guard interval remover 115. The guard interval remover 115 removes a guard interval signal from the output signal of the A/D converter 113, and outputs the guard interval-removed signal to the S/P converter 117. The S/P converter 117 converts the serial signal output from the guard interval remover 115 into a parallel signal, and outputs the parallel signal to the FFT unit 119. The FFT unit 119 performs N-point FFT on the signal output from the S/P converter 117, and outputs the FFT-processed signal to the equalizer 121.

The equalizer 121 channel-equalizes the signal output from the FFT unit 119, and outputs the channel-equalized signal to the P/S converter 123. The equalizer 121 employs the above-described two-dimensional equalization scheme as its equalization scheme.

The P/S converter 123 converts the parallel signal output from the equalizer 121 into a serial signal, and outputs the serial signal to the symbol demapper 125. The symbol demapper 125 demodulates the signal output from the P/S converter 123 with a demodulation scheme corresponding to the modulation scheme used in the transmitter of the OFDMA communication system, and outputs the demodulated signal to the deinterleaver 127. The deinterleaver 127 deinterleaves the signal output from the symbol demapper 125 with a deinterleaving scheme corresponding to the interleaving scheme used in the transmitter of the OFDMA communication system, and outputs the deinterleaved signal to the decoder 129. The decoder 129 decodes the signal output from the deinterleaver 127 with a decoding scheme corresponding to the coding scheme used in the transmitter of the OFDMA communication system, and outputs the decoded signal as the information data transmitted by the transmitter.

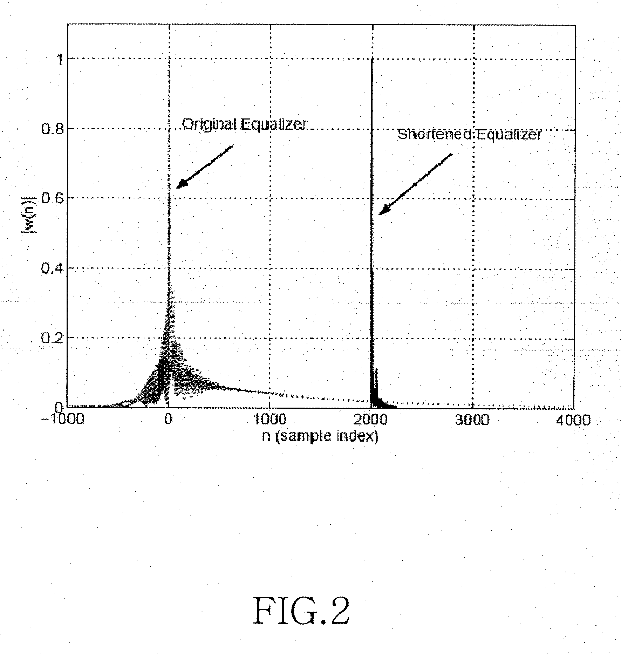

FIG. 2 is a graph illustrating time domain impulse responses of a general FEQ and a provided FEQ according to the present invention.

It can be understood from FIG. 2 that the time domain impulse response of the provided FEQ is shortened in the time domain as compared with the time domain impulse response of the general FEQ. The shortened time domain impulse response reduces the CP length, contributing to a reduction in overhead due to the CP.

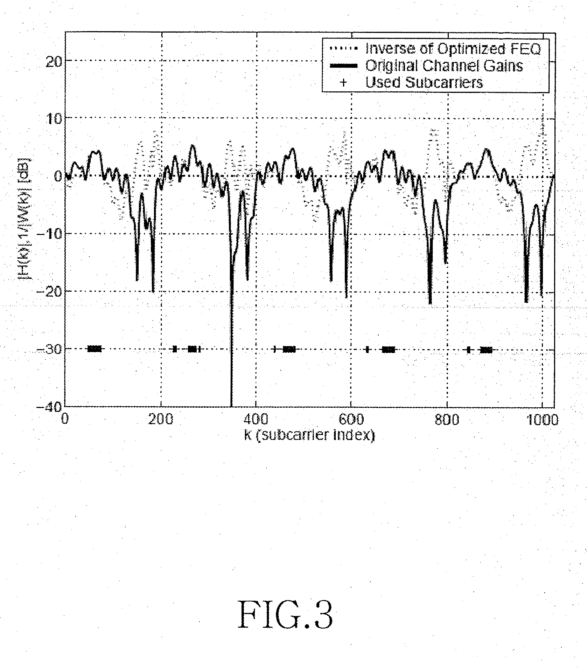

The time domain impulse responses of the general FEQ and the provided FEQ have been described with reference to FIG. 2. Next, with reference to FIG. 3, a description will be made of a gain of a sub-channel used in each MS and a 1-tap FEQ value for an allocated sub-channel according the present invention.

FIG. 3 is a graph illustrating a gain of a sub-channel used in each MS and a 1-tap FEQ value for an allocated sub-channel according to the present invention.

It can be understood from FIG. 3 that the 1-tap FEQ value for the sub-channel allocated in the provided two-dimensional scheme is set to a reciprocal of the sub-channel gain used in each MS.

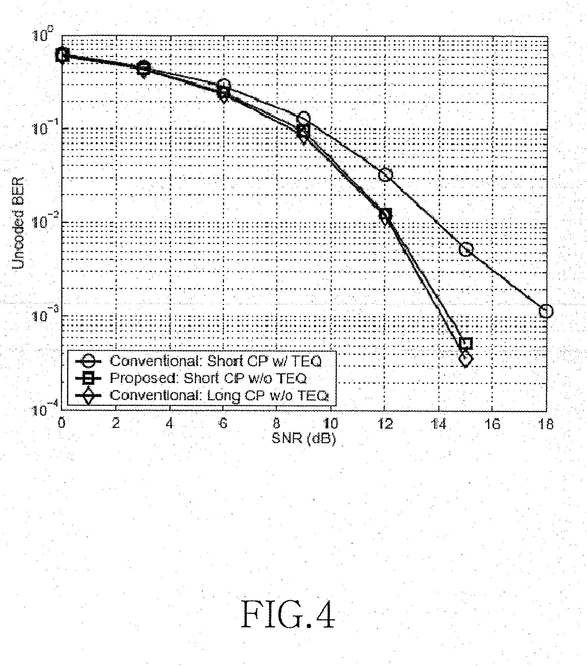

The gain of the sub-channel used in each MS and the 1-tap FEQ value for the allocated sub-channel have been described with reference to FIG. 3. Next, with reference to FIG. 4, a description will be made of a Bit Error Rate (BER) versus SNR performance of an equalization scheme having a short CP and a time domain equalizer, an equalization scheme having a long CP, and a two-dimensional equalization scheme according to the present invention.

FIG. 4 is a graph illustrating a comparison in FER versus SNR performance between an equalization scheme having a short CP and a time domain equalizer, an equalization scheme having a long CP, and a two-dimensional equalization scheme according to the present invention.

As illustrated in FIG. 4, because the BER versus SNR performance of the provided two-dimensional equalization scheme is similar to that of the equalization scheme using the long CP, the provided two-dimensional equalization scheme improves the equalization performance with minimized CP overhead.

The present invention enables the OFDMA communication system not only to perform equalization on the sub-channel allocated to each MS, but also to perform two-dimensional equalization that jointly considers the time domain and the frequency domain. The present invention can prevent generation of the spectral nulls while reducing the CP length, contributing to improvement in the entire system performance.

While the invention has been shown and described with reference to a certain preferred embodiment thereof, it will be understood by those skilled in the art that various changes in form and details may be made therein without departing from the spirit and scope of the invention as defined by the appended claims.

**Claims**

1.   A two-dimensional equalization method in a receiver of a communication system using an Orthogonal Frequency Division Multiple Access (OFDMA) scheme, the method comprising :

    setting as a first value a value of a 1-tap frequency domain equalizer (FEQ) corresponding to a sub-channel allocated to the receiver ;
    setting as a second value a value of a 1-tap FEQ corresponding to sub-channels other than the allocated sub-channel;
    upon receipt of a signal, performing fast Fourier transform (FFT) on the received signal; and
    equalizing the FFT-processed signal according to the values of the 1-tap FEQ.

2.   The two-dimensional equalization method of claim 1, wherein the first value is a reciprocal of a gain of the allocated sub-channel.

3.   The two-dimensional equalization method of claim 1, wherein the second value is a free variable.

4.   The two-dimensional equalization method of claim 3, wherein the free variable is a value that is set such that time domain channel shortening is performed optimally.

5.   A two-dimensional equalization apparatus in a receiver of a communication system using an Orthogonal Frequency Division Multiple Access (OFDMA) scheme, the apparatus comprising:

    an equalizer for setting as a first value a value of a 1-tap frequency domain equalizer (FEQ) corresponding to a sub-channel allocated to the receiver , setting as a second value a value of a 1-tap FEQ corresponding to sub-channels other than the allocated sub-channel, and equalizing a fast Fourier transform (FFT)-processed signal according to the values of the 1-tap FEQ; and
    an FFT unit for performing FFT on a received signal.

6.   The two-dimensional equalization apparatus of claim 5, wherein the first value is a reciprocal of a gain of the allocated sub-channel.

7.   The two-dimensional equalization apparatus of claim 5, wherein the second value is a free variable.

8.   The two-dimensional equalization apparatus of claim 7, wherein the free variable is a value that is set such that time domain channel shortening is performed optimally.

FIG.1

RF PROCESSOR (111) → A/D CONVERTER (113) → GI REMOVER (115) → S/P CONVERTER (117) → FFT (119) → EQUALIZER (121) → P/S CONVERTER (123) → SYMBOL DEMAPPER (125) → DEINTERLEAVER (127) → DECODER (129)

FIG.2

FIG.3

FIG.4